# EUROPEAN PATENT APPLICATION

(11) **EP 1 229 377 A2**
(43) Date of publication of application: **07.08.2002**
(21) Application number: 01309246.5
(22) Date of filing: 31.10.2001
(51) Int. Cl.: G02F 1/13357

(54) **Electronic display**

(30) Priority: 31.01.2001 GB 0102475
(71) Applicant: Nokia Corporation, 02150 Espoo (FI)
(72) Inventor: Doe, Steven, Camberley, Surrey (GB)
(74) Representative: Read, Matthew Charles

(57) **Abstract**

An electronic display is disclosed and includes a radiation source (14) and a layer (13). The layer (13) contains a matrix of particles (15) that emit visible light to illuminate the display in response to operation of the radiation source (14).

## Description

The present invention relates to electronic displays such as liquid crystal displays (LCDs) and more specifically to thin film LCDs. It also relates to other types of electronic display technologies including advertising boards, some electrochromic displays and suspended particle displays. The invention also relates to a mobile telecommunications device, such as a mobile telephone, incorporating an electronic display.

LCDs are well known and generally comprise a digital or alphanumeric display consisting of liquid crystal material sealed between two substrate sheets of plastic or glass. A thin transparent film of conductive material such as a transparent metal oxide film is applied to the surface of each substrate facing the liquid crystal material and the conductive film on one sheet is etched into character forming segments, each having electrical leads extending towards the edge of the sheet for connection to driving circuitry which controls the voltage applied to various areas of the display, and a power supply such as a battery. A polarising filter sandwiched between two transparent supporting layers is also disposed on the outer surface of each substrate sheet with their planes of polarisation oriented at right angles to each other.

The most common LCD is called a twisted nematic (TN) display. Another type of LCD is called a super twisted nematic (STN) display. Both types employ a nematic liquid crystal. A polymer alignment layer is applied to the conductive film on each substrate facing the nematic liquid crystal and is rubbed to create a series of parallel microscopic grooves in the surface of the film which are oriented in the same direction as the plane of polarisation of the polarising filter disposed on each substrate. These grooves ensure that the first layer of molecules of the liquid crystal are aligned with their longitudinal axes parallel to the grooves. Each successive layer of molecules gradually twists until the furthest layer is at an angle (90 degrees in a twisted nematic display) to the first layer and so that the outermost molecules contacting each substrate are matched with the plane of polarisation of the polarisation filters on that substrate. The LCD normally also has a reflector on its back surface.

When there is no voltage applied between the conductive films, light striking one of the polarisation filters is polarised. The first layer of molecules then guides the light they receive to the next layer. When the polarised light reaches the end of the liquid crystal, it has been guided through an angle of 90 degrees and now passes through the second polarising filter and is subsequently reflected back off the reflector placed behind it. The reflected light is guided back through the crystal along the same path and emerges in the same place that it struck the polarisation filter. When an electric charge is applied to a region of the liquid crystal molecules, the orderly twisted arrangement of the molecules in that region is disrupted and the molecules untwist. This changes the angle of the light passing through them so that it no longer matches the angle of the polarising filter preventing the light from passing back out of that region of the LCD, making it darker than the surrounding areas. The region to which a voltage is applied is normally one or more of the character forming segments. By applying current to different character forming segments simultaneously, a recognisable character or numeral can be generated.

The polarising filter is formed from a chemical compound composed of molecules that naturally align in parallel relation to one another so that they create a microscopic filter that blocks any light not matching their alignment. The light passing through the polarising filter between the supporting layers is thereby polarised.

It is known to provide an electronic display with a backlight to enable the display to be read in darkness or in low light conditions. In a conventional electronic display, the backlight comprises a radiation source in the form of one or more light emitting diodes (LEDs) positioned around the perimeter of the display which shines light through the various layers of the display thereby illuminating it.

A problem with the backlight is that the backlighting is not particularly uniform. For instance, when LEDs are positioned around the edge of the display, the light has a greater intensity close to each LED which reduces with distance. This results in the generation of "hot-spots" of light surrounding each LED and the centre of the elecronic display being darker than a region closer to its edge. Attempts have been made to solve this problem using an electroluminescent backlight in which a electroluminescent layer is disposed between the reflector and the liquid crystal layer. When an electric current is passed through the layer it glows to illuminate the display. However, this type of backlight makes the display much more expensive and they also generate substantial electrical interference so are not suitable for use in mobile telecommunications devices.

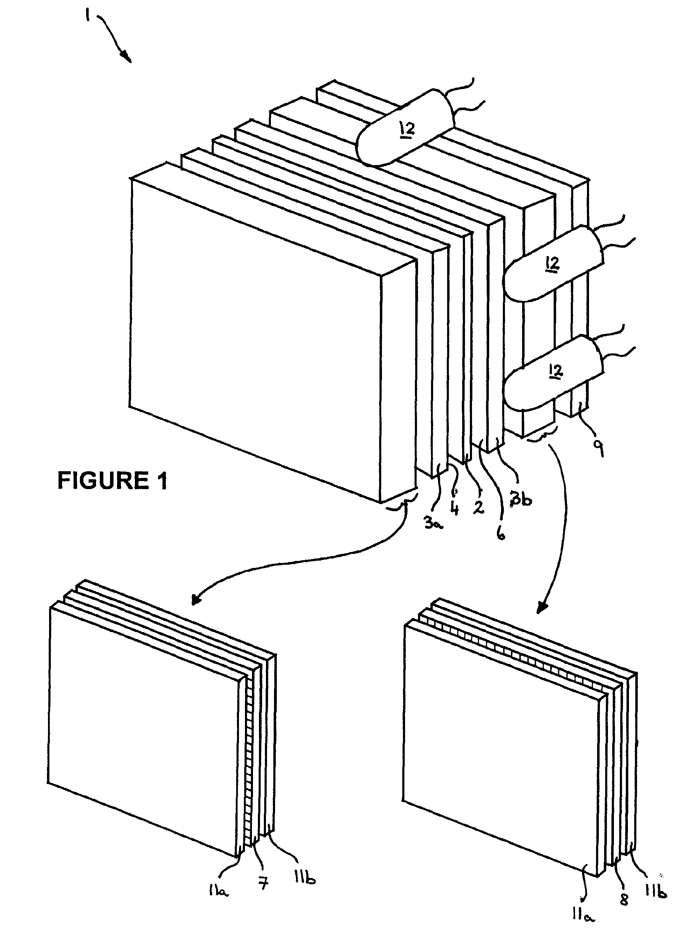

An exploded view of the main components of a prior art LCD 1 is illustrated in Figure 1 and it will be seen that it comprises an active layer comprising a liquid crystal layer 2 sandwiched between a pair of plastic optically non-birefringent front and rear substrate layers 3a, 3b. A thin transparent film 4 of conductive material is applied to the back surface of front substrate layer 3a facing the liquid crystal layer 2 which is then etched to form character segments (not shown). A second transparent conductive film 6 is applied to the surface of the rear substrate 3b facing the liquid crystal layer 2. Each film 4,6 is treated with a polymer alignment layer (not shown) which is rubbed to form a series of parallel microscopic grooves. A polarising filter 7,8 is then positioned over each of the plastic substrate layers 3a, 3b with their planes of polarisation oriented at right angles to each other and so that the plane of polarisation of each filter corresponds to the grooves formed in its adjacent substrate. A pair of supporting layers 11a, 11b sandwich each polarising filter 7,8.

A reflective layer 9 is also located on the back of the LCD behind polarising filter 8 and the back light comprises a plurality of LEDs 12 positioned around the perimeter of the LCD (only three of which are shown in Figure 1).

The thickness of the LCD may be approximately 0.726mm. The liquid crystal layer 2 may be in the region of 0.006mm thick, and the plastic substrate 3a,3b on either side of it may be in the region of 0.1mm thick. Each polarising filter 7,8 and the two supporting layers 11a, 11b have a total thickness in the region of 0.26mm, each filter alone being approximately 0.1mm thick and each supporting layer 11a, 11b being 0.08mm thick.

The present invention seeks to provide an electronic display having an improved back light which overcomes or substantially alleviates the aforementioned disadvantages.

According to the present invention, there is provided an electronic display including a radiation source and a layer associated with the radiation source, wherein the layer contains a matrix of particles that emit visible light to illuminate the display in response to operation of the radiation source. This arrangement is advantageous as it produces a more uniform lighting effect which is relatively low in cost as no specialised tooling or moulding processes are needed in the manufacture of the electronic display.

In a preferred embodiment, the radiation source emits invisible light. Conveniently, the invisible light may be ultra-violet light.

The layer preferably contains a matrix of phosphor or fluorescent particles.

In one embodiment, the radiation source is planar.

Preferably, the particles are uniformly distributed throughout the layer to provide a back light effect of uniform intensity.

In another embodiment, the radiation source is disposed adjacent to the layer and may comprise a plurality of point-like radiation sources.

In this embodiment, the particles are preferably distributed in a non-uniform matrix throughout the layer to provide a back light effect of uniform intensity.

In one embodiment the particles are of a single colour. Alternatively, they may be of different colours.

Preferably, a reflector is disposed on the rear surface of the layer.

The present invention also includes a telecommunications device, such as a mobile telephone, incorporating the electronic display according to the invention.

The electronic display of the invention is preferably a liquid crystal display of the twisted nematic or super twisted nematic types. Alternatively, the electronic display may be an electrochromic display, a suspended particle display or an advertising board.

Embodiments of the invention will now be described, by way of example only, with reference to the accompanying drawings, in which:-
Figure 1 shows a prior art LCD;
Figure 2 shows an LCD according to the invention;
Figure 3 shows a mobile telephone incorporating the electronic display shown in Figure 2.

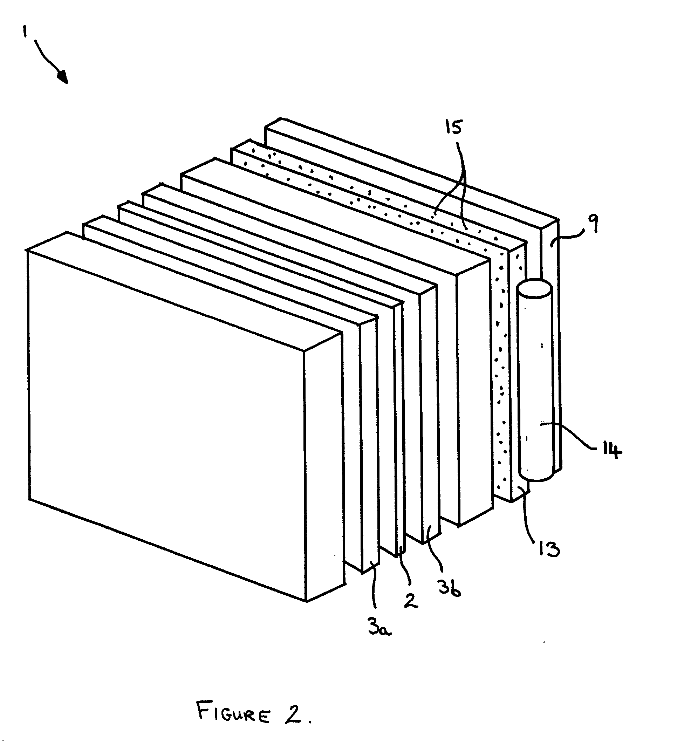

The prior art LCD has already been described above. Referring now to Figure 2, there is shown an LCD according to an embodiment of the present invention which is similar to the prior art LCD except that a light guide 13 or layer associated with the radiation source has been interposed between the reflector 9 and the polarising filter 8 and the radiation source is now an ultra-violet lamp 14 rather than a plurality of LEDs. In the present embodiment, the ultra-violet lamp is cylindrical in shape and extends along an edge of the LCD. Only one lamp 14 is illustrated in the drawing. However, it will be appreciated that more than one lamp 14 may be positioned around the circumference of the LCD. Furthermore, the lamps 14 can have a different shape. For example, point UV light sources could be used or a planar light source could be located behind the light guide 13 and in front of the reflector 9.

The light guide 13 is transparent and contains a sparse matrix of ultra-violet to visible light phosphor particles 15. When the UV light source is activated, the UV light excites the phosphor particles 15 which emit visible light. The reflector 9 behind the light guide 13 increases the efficiency of the resulting illumination and is required for transmissive displays. It can also be positioned between the polarising filter 8 and the light guide 13.

The phosphor particles 15 can be of a single colour where monochrome back lights are required. Alternatively, the particles can be formed from multiple phosphors of different colours where multicoloured or white back lights are required.

When point-like, cylindrical or other shaped light sources surrounding the edge of the LCD are used, the distribution of phosphor particles in the light guide is controlled so as to provide a uniform back lighting effect. However, when a planar UV light source is used, the phosphor particles are uniformly and sparsely distributed throughout the light guide.

Examples of the fluorescent or phosphorescent particles are Zinc sulphide (ZnS) with a dopant such as silver (Ag), Copper (Cu), CuAuAl or CaAg. The radiation source can be InGaN LEDs powered by a low (^{~}10mW) DC source or AC miniature fluorescent tubes.

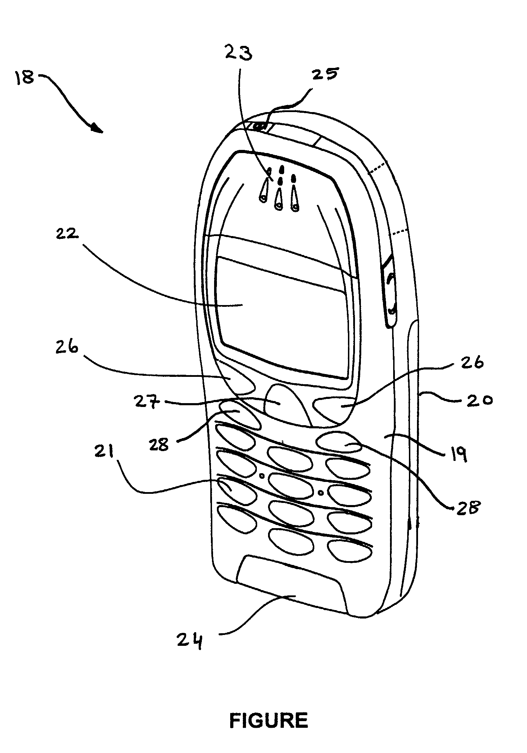

A mobile telephone incorporating the electronic display of the invention is illustrated in Figure 3. The telephone 18 has a front and rear face 19,20. The front face 19 is provided with a user interface having a keypad 21, a display 22 formed from the electronic display 1 of the invention, an ear piece 23, a microphone 24 and an on/off key 25. The telephone 18 may be adapted for communication via a wireless telecommunications network, e.g. a cellular network. However, the telephone 18 could also be designed for a cordless network. The keypad 21 has a first group of keys which are alphanumeric and by means of which a user can enter a telephone number, write a text message (SMS) or write a name associated with a particular number, etc.

The keypad 21 additionally includes two soft keys 26, the functionality of which depends on the state of the telephone and the navigation in the menu by means of a navigation key 27, and two call handling keys 28, which can be used for establishing a call or a conference call, terminating a call or rejecting an incoming call.

Many modifications and variations of the invention falling within the terms of the following claims will be apparent to those skilled in the art and the foregoing description should be regarded as a description of the preferred embodiments only. For example, the electronic display of the invention may be installed in apparatus other than a mobile telephone, such as a personal digital assistant (PDA).

## Claims

1. An electronic display including a radiation source and a layer associated with the radiation source, wherein the layer contains a matrix of particles that emit visible light to illuminate the display in response to operation of the radiation source.

2. An electronic display according to claim 1, wherein the radiation source emits invisible light.

3. An electronic display according to claim 2, wherein the radiation source emits ultra-violet light.

4. An electronic display according to any preceding claim, wherein the layer contains a matrix of phosphor particles.

5. An electronic display according to any of claims 1 to 3, wherein the layer contains a matrix of fluorescent particles.

6. An electronic display according to any preceding claim, wherein the radiation source is planar.

7. An electronic display according to claim 5, wherein the particles are uniformly distributed throughout the layer to provide a back light effect of uniform intensity.

8. An electronic display according to any of claims 1 to 5, wherein the radiation source is disposed adjacent to the layer.

9. An electronic display according to claim 8, wherein the radiation source comprises a plurality of point-like light sources.

10. A electronic display according to claim 8 or 9, wherein the particles are distributed in a non-uniform matrix throughout the layer to provide a back light effect of uniform intensity.

11. An electronic display according to any preceding claim, wherein the particles are of a single colour.

12. An electronic display according to any of claims 1 to 10, wherein the particles are of different colours.

13. An electronic display according to any preceding claim, wherein a reflector is disposed on the layer.

14. An electronic display according to any preceding claim, comprising a liquid crystal display.

15. A telecommunications device incorporating the electronic display according to any of claims 1 to 14.

16. A telecommunications device according to claim 15, comprising a mobile telephone.
